(19)

Europäisches
Patentamt
European
Patent Office
Office européen
des brevets

(11) **EP 4 379 903 A2**

(12) **EUROPEAN PATENT APPLICATION**

(43) Date of publication:
**05.06.2024 Bulletin 2024/23**

(21) Application number: **24168978.5**

(22) Date of filing: **08.04.2024**

(51) International Patent Classification (IPC):
***H01M 10/42*** *(2006.01)*

(52) Cooperative Patent Classification (CPC):
**H01M 10/4228; H01M 10/4285**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.12.2023 CN 202311651790**

(71) Applicant: **Uni-Helium Test Technology.**
**Shanghai. Co., Ltd**
**Shanghai (CN)**

(72) Inventors:
• **YING, Wu**
**SHANGHAI (CN)**
• **CHE, Zhangxiang**
**SHANGHAI (CN)**
• **FANG, Jianhua**
**SHANGHAI (CN)**

(74) Representative: **Zaboliene, Reda**
**Metida**
**Business center Vertas**
**Gyneju str. 16**
**01109 Vilnius (LT)**

(54) **METHOD FOR TESTING AIRTIGHTNESS OF BATTERY CELLS**

(57) Provided is a method for testing airtightness of battery cells, configured for testing the airtightness of the battery cells before liquid injection to screen out NG products. The method adds the pretesting of the battery cells before the initial testing and retesting of the battery cells, so that NG battery cells with a large leakage rate can be screened out in advance, thereby reducing the number of battery cells to be tested entering the following initial testing and retesting of the battery cells, and reducing the equipment area occupied by the retesting working station. Further, the method can achieve fast-paced helium testing and loading/unloading through two chambers that can perform helium testing, loading and unloading alternately, shortening the waiting time for mechanical actions during the initial testing, improving the efficiency of the helium testing, and further enhancing the overall work efficiency of the production line.

```
pretesting  →  initial testing  →  retesting
```

FIG. 1

EP 4 379 903 A2

**Description**

**CROSS-REFERENCE TO RELATED APPLICATION**

This application is based upon and claims the priority to Chinese Patent Application No. 202311651790.5 filed on December 4, 2023, which is incorporated herein by reference in its entirety.

**TECHNICAL FIELD**

The present invention relates to the technical field of airtightness detection for battery cells, in particular to a method for testing airtightness of battery cells.

**BACKGROUND OF THE INVENTION**

The production speed (ppm) of cylindrical battery cell production lines is extremely fast, usually reaching 100ppm, 150ppm, or even 200ppm, which means producing 100, 150, or even 200 battery cells per minute, while the helium detection test time for a single battery cell needs more than 20 seconds. Therefore, the industry usually sets up a large number of test channels in a vacuum helium detection device to perform initial testing on multiple battery cells in groups. During this process, the more battery cells a single initial testing device can simultaneously test, the fewer initial testing devices are required for the initial testing, and the smaller the area occupied by the initial testing device. However, even if a multi-channel vacuum helium detection device detects a NG (i.e., not good) battery cell, it cannot determine specifically which one is the NG battery cell. Therefore, once NG battery cell is detected, the entire set of battery cells needs to be retested one by one to accurately locate the NG battery cell. During this process, the more battery cells the initial testing device can simultaneously detect, the larger the retesting device required for a single round of retesting, and the larger the area occupied by the retesting device. Thus, when designing a battery cell production line, it is necessary to find a balance point between the product NG rate and the number of test channels for the initial testing device.

It is easy to understand that the NG rate of the product objectively exists based on the actual situation of the production line and can be calculated through production data. If the NG rate is large, and there are also many test channels provided inside the initial testing device, a large retesting device is correspondingly required, and the area occupied by the equipment cannot be controlled, which is not conducive to improving production efficiency. If the NG rate fluctuates beyond the design capacity of the equipment, overload stacking will occur, seriously affecting the operation of the production line. Therefore, under a certain NG rate, the number of test channels for the initial testing device needs to be reasonably matched according to the actual production situation, in order to reduce the overall footprint of the equipment. Nevertheless, the helium testing method of first conducting initial testing on battery cells in groups and then conducting retesting separately on the battery cells of each group requires a considerable footprint.

**SUMMARY OF THE INVENTION**

The present invention provides a method for testing airtightness of battery cells, configured for testing the airtightness of the battery cells before liquid injection to screen out NG products. The method includes the following steps:

step S1: using a first detection device to perform airtightness testing, based on a first leakage rate, on each battery cell of a group of battery cells to be tested;

step S2: transporting and unloading battery cell(s) with a leakage rate greater than the first leakage rate, if any, to a NG production line, and transporting and loading remaining battery cells with a leakage rate less than or equal to the first leakage rate to a second detection device;

step S3: using the second detection device to perform helium testing, based on a second leakage rate, on a group of battery cells that are transported and loaded on the second detection device from the first detection device;

step S4: if a total leakage rate of all the battery cells in the group of battery cells being tested on the second detection device is greater than the second leakage rate, transporting and loading the entire group of battery cells being tested on the second detection device to a third detection device; if the total leakage rate of all the battery cells in the group of battery cells being tested on the second detection device is less than or equal to the second leakage rate, unloading the entire group of battery cells being tested on the second detection device;

step S5: using the third detection device to perform helium testing, based on a third leakage rate, on each battery cell that is transported and loaded on the third detection device from the second detection device; and

step S6: transporting and unloading battery cell(s) with a leakage rate greater than the third leakage rate to the NG production line, and unloading remaining battery cells with a leakage rate less than or equal to the third leakage rate.

Further, steps S1 and S2 belong to pretesting of the battery cells, steps S3 and S4 belong to initial testing of the battery cells, and steps S5 and S6 belong to retesting of the battery cells.

Further, the initial testing and the retesting are performed based on helium testing, while the pretesting is performed based on non-helium testing.

Further, each of the second detection device and the third detection device is a helium detection device used for performing helium testing.

Further, the first detection device is an airtightness detection device used for detecting change in pressure difference of each battery cell, rather than a helium detection device.

Further, in step S2, when transporting and loading the remaining battery cells with a leakage rate less than or equal to the first leakage rate to the second detection device, if the number of the remaining battery cells is less than the number of test channels for a single round of testing in the second detection device, then testing of a next group of battery cells in the first detection device is waited to be completed in order to take a normal battery cell from this next group of battery cells to fill up the test channels in the second detection device.

Further, the first leakage rate is greater than the third leakage rate.

Further, the leakage rate Q of the battery cell is calculated using a calculation formula based on pressure change ΔP, cell volume V, and test time t, wherein the

$$Q = \frac{\Delta P * V}{t}$$

calculation formula is .

Further, the first leakage rate, the second leakage rate and the third leakage rate are all calibration values.

Further, the first leakage rate and the third leakage rate are calibrated, the cell volume V and the test time t are the same.

Further, the second detection device includes an upper chamber, a first lower chamber, and a second lower chamber, wherein the first upper chamber is provided with a helium detection device, each of the first lower chamber and the second lower chamber is provided with test channels for accommodating the battery cells to be tested, the upper chamber is used for performing helium testing on one of the first lower chamber and the second lower chamber when loading or unloading the other one of the first lower chamber and the second lower chamber.

Further, the second detection device further includes a second vacuum box, a slide rail assembly, and a sliding platform, wherein the slide rail assembly is accommodated in the second vacuum box and fixedly connected to the second vacuum box, the sliding platform is slidably provided on the slide rail assembly, the first lower chamber and the second lower chamber are arranged on the sliding platform and can slide or remain stationary relative to the upper chamber.

Further, the number of test channels in the first lower chamber is the same as the number of test channels in the second lower chamber.

Further, the number of test channels in the first detection device is greater than or equal to the number of test channels in the first lower chamber.

Further, the first detection device is arranged in a first vacuum box, the third detection device is arranged in a third vacuum box, wherein the first vacuum box, the second vacuum box and the third vacuum box are integrated inside a helium detection assembly, and a transport belt for transporting and loading and unloading the battery cells between the first vacuum box, the second vacuum box and the third vacuum box is provided inside the helium detection assembly.

The method for testing airtightness of battery cells adds the pretesting of the battery cells before the initial testing and retesting of the battery cells, so that NG battery cells with a large leakage rate can be screened out in advance, thereby reducing the number of battery cells to be tested entering the following initial testing and retesting of the battery cells, and reducing the equipment area occupied by the retesting working station.

Further, the method can achieve fast-paced helium testing and loading/unloading through two chambers that can perform helium testing, loading and unloading alternately, shortening the waiting time for mechanical actions during the initial testing, effectively improving the efficiency of the helium testing, and further enhancing the overall work efficiency of the production line.

**BRIEF DESCRIPTION OF THE DRAWINGS**

FIG. 1 is a block diagram of a method for testing airtightness of battery cells according to an embodiment of the present invention.
FIG. 2 is a flow chart of a method for testing airtightness of battery cells according to an embodiment of the present invention.
FIG. 3 is a schematic diagram of the second detection device in the embodiment.
FIG. 4 is a top view of the second detection device in the embodiment.
FIG. 5 is a side view of the second detection device in the embodiment.

**DETAILED DESCRIPTION OF PREFERRED EMBODIMENTS**

To further elaborate on the technical solutions and effects adopted by the present invention to achieve the intended purpose, the following is a detailed explanation of the present invention in conjunction with the accompanying drawings and preferred embodiments.

The terms "first", "second", "third", "fourth", etc. in the specification and claims of the present invention are used to distinguish similar objects, and do not need to be used to describe a specific order or sequence.

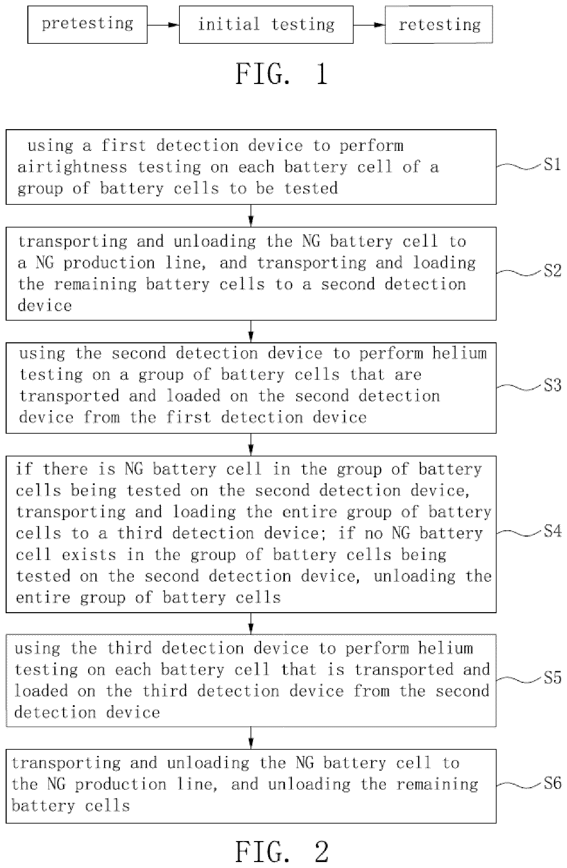

Before liquid injection, a battery cell needs to be tested to ensure that the airtightness of the battery cell meets the requirements, for example, the leakage rate of the battery cell should be less than or equal to a preset minimal leakage rate. If the leakage rate of the battery cell is greater than the preset minimal leakage rate, then the battery cell will be determined as a NG (that is, not good) battery cell. Therefore, NG battery cells can be screened out from a group of battery cells through the airtightness testing before liquid injection, and only the normal battery cells with a leakage rate being less than or equal to the preset minimal leakage rate are transported to be injected with liquid (i.e., electrolyte). Referring to FIG. 1, an embodiment of the present invention provides a method for testing airtightness of battery cells, configured to screen out NG battery cells from the battery cells before liquid injection. The battery cells may be cylindrical battery cells. The method for testing airtightness of battery cells includes three testing stages, i.e., pretesting, initial testing, and retesting. The three testing stages are performed in a consecutive manner. During the pretesting, each battery cell in a group of battery cells to be tested is separately tested, to find out NG battery cells with a large leakage rate from the group of battery cells being tested. Therefore, the battery cells with a large leakage rate can be screened out in advance through the pretesting, to reduce the number of NG battery cells subsequently entering the initial testing and the retesting. After the pretesting, the NG battery cells with a large leakage rate are screened out and removed, with the remaining battery cells being transported and loaded to enter the following initial testing. During the initial testing, all battery cells in a group of battery cells to be tested are simultaneously tested as a whole (that is, the battery cells in the group of battery cells are not tested separately), to determine whether there are NG battery cells in the entire group of battery cells being tested. If no NG battery cells exist in the entire group of battery cells being tested, all battery cells in the entire group of battery cells being tested are unloaded and are not required to enter the following retesting. If there are NG battery cells in the entire group of battery cells being tested, then, all battery cells in the entire group of battery cells being tested are required to enter the following retesting to specifically find out the NG battery cells from the entire group of battery cells. During the retesting, each battery cell in the group of battery cells is separately tested to specifically find out the NG battery cells from the group of battery cells being retested.

Among the three testing stages, the initial testing and the retesting are performed based on helium testing, while the pretesting is performed based on non-helium testing. That is, the initial testing and the retesting involve helium testing, while the pretesting does not involve helium testing. Before entering the helium testing (i.e., the initial testing and the retesting), the pretesting is added to screen out the battery cells with a large leakage rate in advance, and therefore, the number of NG battery cells subsequently entering the helium testing during the initial testing and retesting stages are significantly reduced, thereby improving the efficiency of the helium testing and reducing the area occupied by the equipment during the helium testing.

Referring to FIG. 2, the method for testing airtightness of battery cells includes the following steps:

Step S1: using a first detection device to perform airtightness testing, based on a first leakage rate, on each battery cell of a group of battery cells to be tested.

Step S2: transporting and unloading battery cell(s) with a leakage rate greater than the first leakage rate, if any, to a NG production line, and transporting and loading remaining battery cells with a leakage rate less than or equal to the first leakage rate to a second detection device.

Specifically, steps S1 and S2 belong to the pretesting of the battery cells. The first detection device is an airtightness detection device with a vacuum box, rather than a helium detection device. The first detection device is configured for detecting the NG battery cell(s) with a large leakage rate (i.e., greater than the first leakage rate). The first detection device only detects change in pressure difference of each battery cell when detecting the airtightness of each battery cell being tested, without the need to perform complex detection steps that are required by helium testing. That is, the first detection device does not involve helium testing. Therefore, the instrument cost of the pretesting steps is low. In this embodiment, the first detection device is arranged in a first vacuum box, and multiple test channels are provided in the first vacuum box. The first detection device can perform airtightness testing on all the battery cells to be tested in the test channels at once time, with each battery cell being separately tested in its test channel. Thus, when a NG battery cell is detected, the first detection device can also accurately determine the test channel where the NG battery cell is located. Therefore, the first detection device set up in this way can quickly and accurately screen out the NG battery cells from a group of battery cells to be tested, removing the NG battery cells with a large leakage rate in advance before entering the initial testing and retesting, reducing the number of NG battery cells in the battery cells during the following helium testing. For example, if a group of battery cells to be tested during the initial testing contains 20 battery cells, the initial testing can only determine that there is NG battery cell among the group of 20 battery cells being tested, but cannot specifically detect which one is the NG battery cell among the 20 battery cells. The finding of NG battery cell in the group of 20 battery cells being tested through the initial testing means that all the 20 battery cells need to undergo the subsequent retesting. In this embodiment, before the initial testing, the pretesting is added and the NG battery cells with a leakage rate greater than the first leakage rate can be screened out and removed in advance, which can reduce the subsequent retesting process of at least 20 battery cells, thereby greatly improving the production efficiency of the production line and also greatly enhancing the overall NG rate carrying capacity of the production line.

The leakage rate of the battery cell in step S2 is calculated using a calculation formula based on pressure change $\Delta P$, cell volume V, and test time t, wherein the calculation formula is

$$Q = \frac{\Delta P * V}{t}$$

. According to this calculation formula, it can be concluded that when the cell volume V and the test time t are fixed, the leakage rate Q is correlated positively with the pressure change $\Delta P$, that is, the greater the pressure change $\Delta P$, the greater the leakage rate Q. If the leakage rate Q of the battery cell exceeds the first leakage rate, it means that the battery cell must be an NG battery cell and needs to be transported to the NG production line for subsequent production operations.

In this embodiment, the first leakage rate is a calibration value, and it is also calculated using the calculation formula for calculating the leakage rate of the battery cell. When performing calibration calculation, the pressure change $\Delta P$ is 200Pa, the cell volume V is 20ml, and the test time t is 30s, then the first leakage rate is 1.33E-4 Pa.m$^3$/S.

In step S2, when transporting and loading the remaining battery cells with a leakage rate less than or equal to the first leakage rate to the second detection device, if the number of the remaining battery cells is less than the number of test channels for a single round of testing in the second detection device, then the testing of a next group of battery cells in the first detection device is waited to be completed in order to take a normal battery cell from this next group of battery cells to fill up the test channels in the second detection device, to ensure the efficiency of the initial testing of battery cells in the second detection device.

Step S3: using the second detection device to perform helium testing, based on a second leakage rate, on a group of battery cells that are transported and loaded on the second detection device from the first detection device.

Step S4: if a total leakage rate of all the battery cells in the group of battery cells being tested on the second detection device is greater than the second leakage rate, transporting and loading the entire group of battery cells being tested on the second detection device to a third detection device; if the total leakage rate of all the battery cells in the group of battery cells being tested on the second detection device is less than or equal to the second leakage rate, unloading the entire group of battery cells being tested on the second detection device.

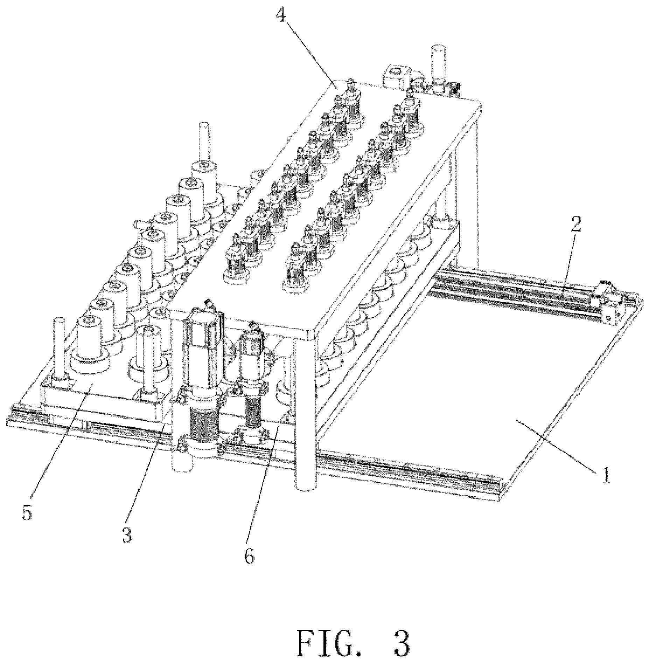

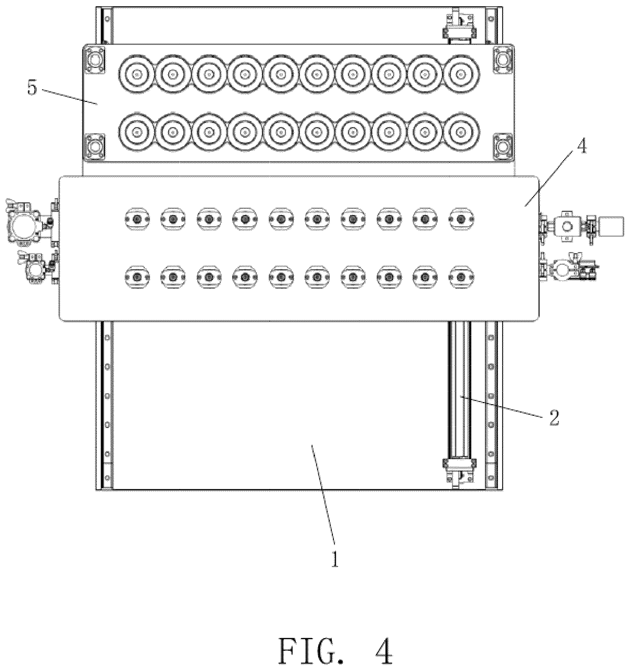

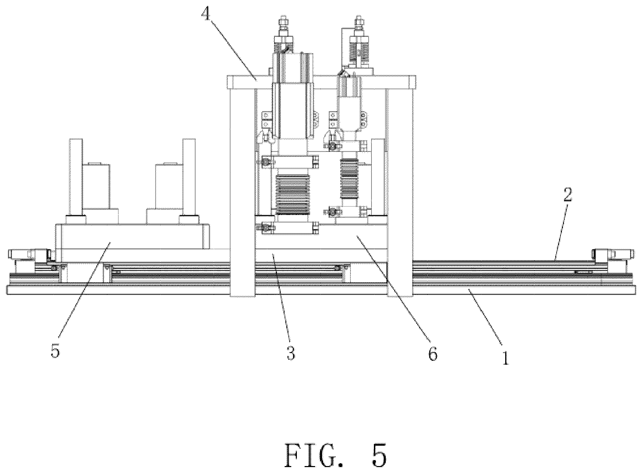

Specifically, steps S3 and S4 belong to the initial testing of the battery cells. The second detection device is a helium detection device used for performing helium testing. Referring to FIG. 3 to FIG. 5 together, the second detection device includes a second vacuum box 1, a sliding rail assembly 2, a sliding platform 3, an upper chamber 4, a first lower chamber 5, and a second lower chamber 6. The sliding rail assembly 2 is accommodated in the second vacuum box 1 and fixedly connected to the second vacuum box 1. The sliding platform 3 is slidably provided on the sliding rail assembly 2, and the sliding platform 3 is driven by a cylinder. The first lower chamber 5 and the second lower chamber 6 are arranged on the sliding platform 3, so that the first lower chamber 5 and the second lower chamber 6 can slide together with the sliding platform 3 on the slide rail assembly 2, thereby sliding relative to the upper chamber 4 or stationary relative to the upper chamber 4. The upper chamber 4 is provided with a helium detection device, and the helium detection device at least includes a filling mechanism, an evacuation valve group, and a vacuum breaking valve group. Each of the first lower chamber 5 and the second lower chamber 6 is provided with test channels for accommodating the battery cells to be tested. The upper chamber 4 can perform helium testing with one of the first lower chamber 5 and the second lower chamber 6 when loading or unloading the other one of the first lower chamber 5 and the second lower chamber 6.

In this embodiment, the number of test channels in the first lower chamber 5 is the same as the number of test channels in the second lower chamber 6. The number of test channels in the first detection device is equal to the number of test channels in the first lower chamber 5 and the number of test channels in the second lower chamber 6. This is because NG battery cells are inevitable during the pretesting of the battery cells. In step S2 mentioned above, if the number of the remaining battery cells after the pretesting is less than the number of test channels for a single round of the initial testing in the second detection device, that is, less than the number of test channels in the first lower chamber 5, it is needed to wait for the pretesting of a next group of battery cells to be completed and take a normal battery cell from this group of battery cells to fill up the second detection device. Therefore, the number of test channels in the first detection device used for the pretesting cannot be set to be less than the number of test channels in the first lower chamber 5, in order to further improve the efficiency of the production line, and conveniently replenish the insufficient battery cells after NG battery cells are screened out.

When using the second detection device for performing the initial testing, the battery cells to be tested are first loaded to the test channels in the first lower chamber 5 and the second lower chamber 6, so that the test channels of the first lower chamber 5 and the second lower chamber 6 are all loaded with the battery cells to be tested. Then, the second lower chamber 6 is controlled to slide to the corresponding position of the upper chamber 4, and the upper chamber 4 is controlled to perform helium testing on the battery cells loaded on the second lower chamber 6; after this action is completed, the first lower chamber 5 is controlled to slide to the corresponding position of the upper chamber 4, the second lower chamber 6 is correspondingly controlled to leave the helium testing position, and the upper chamber 4 is controlled to perform helium testing on the battery cells loaded on the first lower chamber 5. At the same time, corresponding operations are performed on the battery cells in the second lower chamber 6 based on the helium testing results, that is, transport them to the third detection device or unload them, and then load battery cells from the first detection device to the second lower chamber 6; after all the battery cells to be tested in the second lower chamber 6 are replaced, the helium testing of the first lower chamber 5 is also completed, then the second lower chamber 6 is controlled to slide to the corresponding position of the upper chamber 4, and this cycle is repeated. The second detection device can achieve fast helium testing and loading/unloading through two chambers that can load and unload the battery cells to be tested alternately, reducing the waiting time for mechanical actions during the initial testing and effectively improving the efficiency of helium testing.

In addition, in this embodiment, the second leakage rate is a calibration value, which can also be calculated using the calculation formula for calculating the leakage rate of the battery cell. However, since the helium testing in step S3 involves performing helium testing on all the battery cells in the group of battery cells being tested simultaneously (that is, the battery cells in the group of battery cells are not separately tested), during calibration calculation, some parameters of the second leakage rate, namely the cell volume V and the pressure change $\Delta P$, are different from the first leakage rate, so the second leakage rate cannot be directly compared with the first leakage rate.

Step S5: using the third detection device to perform helium testing, based on a third leakage rate, on each battery cell that is transported and loaded on the third detection device from the second detection device.

Step S6: transporting and unloading battery cell(s) with a leakage rate greater than the third leakage rate to the NG production line, and unloading remaining battery cells with a leakage rate less than or equal to the third leakage rate.

Specifically, steps S5 and S6 belong to the retesting of the battery cells. The third detection device is a helium detection device used for performing helium testing. The third detection device is arranged in a third vacuum box, and the third vacuum box is provided with multiple test channels. In this embodiment, the number of test channels in the third vacuum box is the same as the number of test channels in either the first lower chamber 5 or the second lower chamber 6. The first vacuum box, the second vacuum box 1 and the third vacuum box are integrated inside a helium detection assembly. A transport belt for transporting and loading and unloading the battery cells between the first vacuum box, the second vacuum box 1 and the third vacuum box is provided inside the helium detection assembly. The helium detection assembly conveniently and continuously connects three working stations through the first vacuum box, the second vacuum box 1 and the third vacuum box that are integrated together, so that it is fast and convenient for loading, unloading and transporting the battery cells to be tested, improving the overall production efficiency of the production line.

The third leakage rate is a calibration value, which can also be calculated using the calculation formula for calculating the leakage rate of the battery cell. In this embodiment, the number of test channels in the third detection device is equal to the number of test channels in the first detection device, and is also equal to the number of test channels of the first lower chamber 5. When performing calibration calculation, the third leakage rate is taken as 1.0E-06 Pa.m$^3$/S, which is much lower than the first leakage rate.

It should be noted that in previous step S4 mentioned above, during calibration calculation, some parameters of the second leakage rate, namely the cell volume V and the pressure change $\Delta P$, are different from the first leakage rate. In step S6, during calibration calculation, some parameters (namely the cell volume V and the pressure change $\Delta P$) of the third leakage rate are also different from some parameters (namely the cell volume V and the pressure change $\Delta P$) of the second leakage rate, so the second leakage rate cannot be directly compared with the third leakage rate. However, in this embodiment, the cell volume V and the test time t in the first leakage rate are the same as those in the third leakage rate, so the third leakage rate can be directly compared with the first leakage rate. When designing the scale of the production line of battery cells, the scale of the pretesting working station, initial testing working station and retesting working station of the production line of battery cells can be adjusted by adjusting the first leakage rate, second leakage rate and third leakage rate, which can also improve the overall NG rate carrying capacity of the production line.

In summary, the method for testing airtightness of battery cells adds the pretesting of the battery cells before the initial testing and retesting of the battery cells, so that NG battery cells with a large leakage rate can be screened out in advance, thereby reducing the number of battery cells to be tested entering the following initial testing and retesting of the battery cells, and reducing the equipment area occupied by the retesting working station.

Further, the method can achieve fast-paced helium testing and loading/unloading through two chambers that can perform helium testing, loading and unloading alternately, shortening the waiting time for mechanical actions during the initial testing, effectively improving the efficiency of the helium testing, and further enhancing the overall work efficiency of the production line.

The above are only specific embodiments of the present invention, but the scope of protection of the present invention is not limited to this. Any skilled person familiar with the technical field within the scope of the disclosed technology can easily think of changes or replacements, which should be covered within the scope of protection of the present invention. Therefore, the protection scope of the present invention should be based on the protection scope of the claims.

## Claims

1. A method for testing airtightness of battery cells, configured for testing the airtightness of the battery cells before liquid injection, the method comprising the following steps:

    step S1: using a first detection device to perform airtightness testing, based on a first leakage rate, on each battery cell of a group of battery cells to be tested;

    step S2: transporting and unloading battery cell(s) with a leakage rate greater than the first leakage rate, if any, to a NG production line, and transporting and loading remaining battery cells with a leakage rate less than or equal to the first leakage rate to a second detection device;

    step S3: using the second detection device to perform helium testing, based on a second leakage rate, on a group of battery cells that are transported and loaded on the second detection device from the first detection device;

    step S4: if a total leakage rate of all the battery cells in the group of battery cells being tested on the second detection device is greater than the second leakage rate, transporting and loading the entire group of battery cells being tested on the second detection device to a third detection device; if the total leakage rate of all the battery cells in the group of battery cells being tested on the second detection device is less than or equal to the second leakage rate, unloading the entire group of battery cells being tested on the second detection device;

    step S5: using the third detection device to perform helium testing, based on a third leakage rate, on each battery cell that is transported and loaded on the third detection device from the second detection device; and

    step S6: transporting and unloading battery cell(s) with a leakage rate greater than the third leakage rate to the NG production line, and unloading remaining battery cells with a leakage rate less than or equal to the third leakage rate.

2. The method for testing airtightness of battery cells as claimed in claim **1,** wherein steps S1 and S2 belong to pretesting of the battery cells, steps S3 and S4 belong to initial testing of the battery cells, and steps S5 and S6 belong to retesting of the battery cells.

3. The method for testing airtightness of battery cells as claimed in claim **2,** wherein the initial testing and the retesting are performed based on helium testing, while the pretesting is performed based on non-helium testing.

4. The method for testing airtightness of battery cells as claimed in claim **3,** wherein each of the second detection device and the third detection device is a helium detection device used for performing helium testing.

5. The method for testing airtightness of battery cells as claimed in claim **4,** wherein the first detection device is an airtightness detection device used for detecting change in pressure difference of each battery cell, rather than a helium detection device.

6. The method for testing airtightness of battery cells as claimed in claim **1,** wherein in step S2, when transporting and loading the remaining battery cells with a leakage rate less than or equal to the first leakage rate to the second detection device, if the number of the remaining battery cells is less than the number of test channels for a single round of testing in the second detection device, then testing of a next group of battery cells in the first detection device is waited to be completed in order to take a normal battery cell from this next group of battery cells to fill up the test channels in the second detection device.

7. The method for testing airtightness of battery cells as claimed in claim **1,** wherein the first leakage rate is greater than the third leakage rate.

8. The method for testing airtightness of battery cells as claimed in claim **1,** wherein the leakage rate Q of the battery cell is calculated using a calculation formula based on pressure change $\Delta P$, cell volume V, and test time t, wherein the calculation formula is

$$Q = \frac{\Delta P * V}{t}.$$

9. The method for testing airtightness of battery cells as claimed in claim **8,** wherein the first leakage rate, the second leakage rate and the third leakage rate are all calibration values.

10. The method for testing airtightness of battery cells as claimed in claim **9,** wherein the first leakage rate and the third leakage rate are calibrated, the cell volume V and the test time t are the same.

11. The method for testing airtightness of battery cells as claimed in claim **1,** wherein the second detection device comprises an upper chamber (4), a first lower chamber (5), and a second lower chamber (6), wherein the first upper chamber (4) is provided with a helium detection device, each of the first lower chamber (5) and the second lower chamber (6) is provided with test channels for accommodating the battery cells to be tested, the upper chamber (4) is used for performing helium testing on one of the first lower chamber (5) and the second lower chamber (6) when loading or unloading the other one of the first lower chamber (5) and the second lower chamber (6).

12. The method for testing airtightness of battery cells as claimed in claim **11,** wherein the second detection device further comprises a second vacuum box (1), a slide rail assembly (2), and a sliding platform (3), wherein the slide rail assembly (2) is accommodated in the second vacuum box (1) and fixedly connected to the second vacuum box (1), the sliding platform (3) is slidably provided on the slide rail assembly (2), the first lower chamber (5) and the second lower chamber (6) are arranged on the sliding platform (3) and can slide or remain stationary relative to the upper chamber (4).

13. The method for testing airtightness of battery cells as claimed in claim **11,** wherein the number of test channels in the first lower chamber (5) is the same as the number of test channels in the second lower chamber (6).

14. The method for testing airtightness of battery cells as claimed in claim **11,** wherein the number of test channels in the first detection device is greater than or equal to the number of test channels in the first lower chamber (5).

15. The method for testing airtightness of battery cells as claimed in claim **12,** wherein the first detection device is arranged in a first vacuum box, the third detection device is arranged in a third vacuum box, wherein the first vacuum box, the second vacuum box (1) and the third vacuum box are integrated inside a helium detection assembly, and a transport belt for transporting and loading and unloading the battery cells between the first vacuum box, the second vacuum box (1) and the third vacuum box is provided inside the helium detection assembly.

```
┌──────────────┐     ┌──────────────────┐     ┌──────────────┐
│  pretesting  │ ──> │  initial testing │ ──> │  retesting   │
└──────────────┘     └──────────────────┘     └──────────────┘
```

FIG. 1

```
┌─────────────────────────────────────────────────────┐
│  using a first detection device to perform           │
│ airtightness testing on each battery cell of a       │── S1
│ group of battery cells to be tested                  │
└─────────────────────────────────────────────────────┘
                          │
                          ▼
┌─────────────────────────────────────────────────────┐
│ transporting and unloading the NG battery cell to    │
│ a NG production line, and transporting and loading   │── S2
│ the remaining battery cells to a second detection    │
│ device                                               │
└─────────────────────────────────────────────────────┘
                          │
                          ▼
┌─────────────────────────────────────────────────────┐
│ using the second detection device to perform helium  │
│ testing on a group of battery cells that are         │── S3
│ transported and loaded on the second detection       │
│ device from the first detection device              │
└─────────────────────────────────────────────────────┘
                          │
                          ▼
┌─────────────────────────────────────────────────────┐
│ if there is NG battery cell in the group of battery  │
│ cells being tested on the second detection device,   │
│ transporting and loading the entire group of battery │
│ cells to a third detection device; if no NG battery  │── S4
│ cell exists in the group of battery cells being      │
│ tested on the second detection device, unloading the │
│ entire group of battery cells                        │
└─────────────────────────────────────────────────────┘
                          │
                          ▼
┌─────────────────────────────────────────────────────┐
│ using the third detection device to perform helium   │
│ testing on each battery cell that is transported and │── S5
│ loaded on the third detection device from the second │
│ detection device                                     │
└─────────────────────────────────────────────────────┘
                          │
                          ▼
┌─────────────────────────────────────────────────────┐
│ transporting and unloading the NG battery cell to    │
│ the NG production line, and unloading the remaining  │── S6
│ battery cells                                        │
└─────────────────────────────────────────────────────┘
```

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311651790